# EUROPEAN PATENT SPECIFICATION

(11) **EP 2 066 072 B1**
(45) Date of publication and mention of the grant of the patent: **26.05.2010**
(21) Application number: 07122032.1
(22) Date of filing: 30.11.2007
(51) Int. Cl.: H04L 12/14, H04W 4/00

(54) **Method and apparatus for facilitating the remuneration for sharing connection resources in multihop networks**
Verfahren und Vorrichtung ermöglichend die Vergütung für die Teilhabe an Verbindungsressourcen in Multihop-Netzen
Procédé et appareil facilitant la rémunération pour le partage de ressources de connexion dans des réseaux multi-sauts

(43) Date of publication of application: 03.06.2009
(73) Proprietor: NTT DoCoMo, Inc., Tokyo (JP)
(72) Inventor: Hamatsu, Makoto, 80803, Munich (DE); Kounga, Gina, 35200, Rennes (FR); Schaefer, Christian, 85764, Oberschleißheim (DE); Walter, Thomas, 80935, Munich (DE)
(74) Representative: Schöniger, Franz-Josef

(56) References cited:
- DE-A1-102005 011 085
- US-A1- 2003 054 796
- LAMPARTER B ET AL: "Charging support for ad hoc stub networks" COMPUTER COMMUNICATIONS, ELSEVIER SCIENCE PUBLISHERS BV, AMSTERDAM, NL, vol. 26, no. 13, 15 August 2003 (2003-08-15), pages 1504-1514, XP004437381 ISSN: 0140-3664

## Description

### FIELD OF THE INVENTION

The present invention relates to a method and an apparatus for connection sharing.

### BACKGROUND OF THE INVENTION

One may imagine the situation where one does not only spend money for his mobile phone but may make money out of it. This may become possible if one starts to think about selling and buying digital resources such as network connectivity or memory space. However, to make this happen a number of preconditions are to be met: seller and buyer have to meet on the electronic market place; they have to agree on the digital resource being traded; further, the conditions have to be determined about selling the resource but as well as buying the resource. These conditions are then fixed in a contract signed by the parties. And, seller as well as buyer may be concerned with generating evidences that the contract has been fulfilled or not fulfilled. The latter one is a problem to be dealt with by the present invention.

Trading goods on the Internet is commonplace today. Electronic auctions and selling and buying digital multimedia content are two examples. As well is trading digital resources becoming popular which mostly takes place in peer-to-peer networks. Transactions performed in those environments are supported by an infrastructure that allows to verify identities, to assess the reputation of the actors and that supports the remuneration process. It is desirable to enable trading digital resources in a manner which extend it to allow spontaneous transactions between probably a priori unknown actors who meet only occasionally. Since transactions are spontaneous and actors do not know each other in advance, generating evidences that each actor has fulfilled the agreed contractual obligations is an issue.

It is therefore desirable to provide a scheme to generate such evidences on one hand and to minimize the risk when either actor is defrauding.

The selling and buying of digital resources in ad hoc networks is mainly studied in the literature with the goal to stimulate cooperation(see e.g. J. Hubaux and L. Buttyan. Nuglets: a virtual currency to stimulate cooperation in self-organized mobile ad hoc networks. Technical Report DSC/2001/001, EPFL, Jan. 2001, and S. Zhong, J. Chen, and Y. R. Yang. Sprite: A simple, cheat-proof, credit-based system for mobile ad-hoc networks. In Proceedings of IEEE INFOCOM '03, San Francesco, CA, April 2003.) Digital currency is used as an incentive to make actors forward packets. While the use of remuneration as an incentive for forwarding packets is discussed in the prior art, there remains the problem of generating of evidences in a way that avoids defrauding from either the buying and/or selling actor. In the solution proposed by Zhong et al. , forwarding nodes are remunerated after they reported to a TTP that they forwarded some packets. However, still the proposed solution is open to fraud, and it is therefore desirable to avoid such a fraud by an improved system.

Such an improved system should desirably be achieved without relying on specific modules that are able to identify misbehaving actors or that provide security services as those used by Buchegger and Le Boudec(see e.g. S. Buchegger and J.-Y. L. Boudec. Performance analysis of the confidant protocol. In MobiHoc '02: Proceedings of the 3rd ACM international symposium on Mobile ad hoc networking & computing, pages 226{236, New York, NY, USA, 2002. ACM Press.) and Hubaux and Buttyan (see J. Hubaux and L. Buttyan. Nuglets: a virtual currency to stimulate cooperation in self-organized mobile ad hoc networks. Technical Report DSC/2001/001, EPFL, Jan. 2001).

LAMPARTER B ET AL: "Charging support for ad hoc stub networks" COMPUTER COMMUNICATIONS, 15 August 2003, XP004437381 discloses a charging support method for ad hoc stub networks. There is provided a charging scheme which enables the charging of the usage of a connection between a corresponding node CN and an access point AP by a mobile node MN. For that purpose the corresponding node CN signs the received amount of data from the mobile node or any intermediate node from which the node receives the data. The signed confirmation of service provision can then be used for charging.

### SUMMARY OF THE INVENTION

According to one embodiment there is provided a method for gathering evidence that a connection resource in a mobile network has been shared, said connection resource being a connection between a first node and a second node which is a trusted third party, and said connection resource being offered by said first node to be used by a third node to enable said third node though said shared connection to connect to said second node via said first node, wherein method comprises:
repeatedly sending by said third node an evidence indication comprising an extent indication which indicates the extent to which said third node has made use of said connection by using the connection between said third node and said first node, said evidence indication being signed by said third node;
for each evidence indication sent by said third node, sending a corresponding evidence indication from said second node to said first node, said evidence indication comprising an extent indication which indicates the extent to which said third node has made use of said connection by using the connection between said first node and said second node, said evidence indication being signed by said second node;
pairwise matching said evidence indication from said third node and its corresponding evidence indication from said second node by mutually comparing their respective extent indications to determine the extent by which said shared connection has been used and to avoid fraud when performing billing or remuneration for the extent to which the shared connection has been used, wherein said extent indication comprises one or more of the following:
the number of bytes received or sent;
a time indication of the time for which the connection was used.

This enables the gathering of evidences to avoid fraud in case of shared resources. This permits a third party that performs charging to know whether the selling node indeed provided the service for which it should be remunerated. The protocol defined avoids defrauding actors to be remunerated.

This enables the determination of the usage and possibly also the parties involved and the terms of the contract.

According to one embodiment the method further comprises:
sending by said first node to said second node an Evidence_Request (ER) which comprises an indication of the extent to which the shared connection has been offered by said first node to said third node to thereby request said second node to confirm the extent to which the shared connection has been offered by said first node to said third node, said indication of extent sent by said first node corresponding to the indication of extent contained in said evidence indication sent from said third node to said first node, and
confirming said extent mentioned in said Evidence_Request (ER) by said evidence indication forming an evidence answer sent by said second node to said first node.

This enables a cross check of the claims of all parties involved in the connection sharing to avoid fraud.

According to one embodiment the charging and/or remuneration scheme is packet or volume based, and the said first node is running packet based trigger which fires for sending an evidence request, and
said first node is additionally running a timer which is reset after every evidence indication received and which fires to trigger the sending of an evidence request when said first node has not forwarded or received packets for some time but said packet based trigger could not fire due to missing packets.

This avoids the system getting stalled due to missing packets.

According to one embodiment the method further comprises:
sending by said first node to said third node an Evidence_Request (ER) which comprises an indication of the extent to which the shared connection has been offered by said first node to said third node to thereby request said third node to confirm the extent to which the shared connection has been offered by said first node to said third node, and
confirming said extent mentioned in said Evidence_Request (ER) by said evidence indication forming an evidence answer sent by said third node to said first node.

According to one embodiment if said second node is not a trusted third party a trusted anchor is chosen and the method for gathering evidences is run between said first node, said third node and said trusted anchor while the shared connection is the connection between said first and said second node.

This enables connection with untrusted parties.

According to one embodiment charging and/or remuneration is performed based on a contract concluded by electronically exchanging signed messages between said first and said third node, and wherein the fulfillment of said contract is proven by said pairwise matching of said evidence indication and said evidence answer to enable a correct charging and/or remuneration.

According to one embodiment charging and/or remuneration is performed based on a metering of the usage of the shared connection, said metering being performed by one or more of the nodes involved.

According to one embodiment said contract comprises, the unique identifier of the contract, the identifier of the seller, the identifier of the buyer, and the terms agreed on between seller and buyer and the identification of seller and buyer, e.g. by their respective certificates, wherein in order to guarantee the authenticity of the contract said contract is signed using the private key of the emitter and may be encrypted using the public key of the respective recipient such that said first node sends initially a draft contract to said third node which he signs using its private key and encrypts the signed draft contract with the third nodes' public key, wherein after said third node has received the draft contract from said first node it decrypts it and checks the first nodes' signature, and if the signature is valid and the third node accepts the proposed terms then the third node generates a contract that it signs with its private key and may encrypt it with the public key of said first node before sending it to said first node which upon receiving the contract decrypts it, signs it and may encrypt it with the respective recipients' public key before sending the contract to the second node and the third node so that all involved actors have a valid copy of the agreed contract.

According to one embodiment said repeated sending of evidence indications is based on a trigger which fires based on one or more of the following conditions:
expiration of a certain period of time;
transmission or reception of a certain volume of data.

According to one embodiment there is provided an apparatus for gathering evidence that a connection resource in a mobile network has been shared, said connection resource being a connection between a first node and a second node which is a trusted third party, and said connection resource being offered by said first node to be used by a third node to enable said third node through said shared connection to connect to said second node via said first node, wherein said apparatus comprises:
a module for repeatedly sending by said third node an evidence indication comprising an extent indication which indicates the extent to which said third node has made use of said connection by using the connection between said third node and said first node, said evidence indication being signed by said third node;
a module for, for each evidence indication sent by said third node, sending a corresponding evidence indication from said second node to said first node, said evidence indication comprising an extent indication which indicates the extent to which said third node has made use of said connection by using the connection between said first node and said second node, said evidence indication being signed by said second node;
a module for pairwise matching said evidence indication from said third node and its corresponding evidence indication from said second node by mutually comparing their respective extent indications to determine the extent by which said shared connection has been used and to avoid fraud when performing billing or remuneration for the extent to which the shared connection has been used, wherein said extent indication comprises one or more of the following:
the number of bytes received or sent;
a time indication of the time for which the connection was used.

According to one embodiment there is provided an apparatus further comprising:
a module for carrying out a method according to one of the embodiments of the invention.

According to one embodiment there is provided a computer program comprising program code which enables a computer to carry out according to one of the embodiments of the invention.

This permits a third party that performs charging to know whether the selling node indeed provided the service for which it should be remunerated. The protocol defined in this paper avoids defrauding actors to be remunerated.

### DESCRIPTION OF THE DRAWINGS

Fig. 1 schematically illustrates a system configuration in which an embodiment of the invention may be used.
Fig. 2 schematically illustrates a signal flow according to an embodiment of the invention.
Fig. 3 schematically illustrates a signal flow according to a further embodiment of the invention.
Fig. 4 schematically illustrates a further system configuration in which an embodiment of the invention may be used.
Fig. 5 schematically illustrates a signal flow according to a further embodiment of the invention.

### DETAILED DESCRIPTION

At first some terms which will be used in the following description will be explained.
EI = Evidence_Indication
EA = Evidence_Answer
ER = Evidence_Request
MNO = Mobile Network Operator

In the following there will be described embodiments of the invention which includes a scenario, identifying the actors, their specific requirements and how these are being met.

A scenario where an embodiment of the invention may be employed is e.g. a situation where Alice unfortunately cannot use the mobile network because of network congestion, but she wants to access her Content Provider's (CP) server. On the other hand, Ken's mobile phone is connected and, upon mutual agreement and detailed in a contract, Ken provides Alice with network connectivity by sharing his network connection. For connecting Alice's and Ken's mobile phone, local communication interfaces such as Bluetooth or WiFi can be used. The contract that is being concluded between Alice and Ken, defines the conditions under which Alice may use Ken's connection. In particular, according to one embodiment Ken is remunerated a certain amount of money for the usage of his connection by Alice.

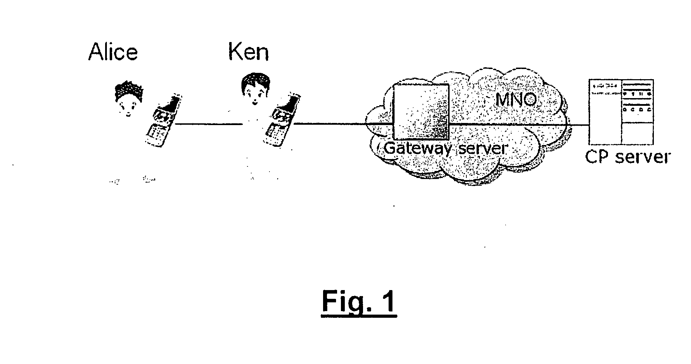

As depicted in Fig. 1 the following actors are involved in such a scenario:
- Alice - the buyer of the connectivity to the network;
- Ken - the seller of the connectivity to the network;
- Mobile network operator (MNO) - providing the interface (gateway server) for connectivity into its network and charges for the network connection.

One may also refer to Ken (or his node) as first node, to the mobile network operator (or his node) as a second node and to the node of Alice as third node.

### Actor Specific Issues

With respect to the described scenario, each actor has specific interests:
- Alice would like to get digital content data from the CP server with her mobile phone, even though she has no connection to the mobile network.
- Ken would like to receive some money from Alice by selling his network connection to her.
- The MNO would like to offer a service where the MNO is doing charging and billing for Ken based on the contract between Alice and Ken.

### Pre-conditions

Before Alice and Ken negotiate a contract and Alice can access her CP's server, the following technical and administrative pre-conditions should be established:
- Alice and Ken have mobile phones capable of setting up connectivity via local communication interfaces.
- A metering function should be implemented on mobile devices and the gateway server of the MNO. Metering is performed for accounting of Alice's traffic via Ken's network connection.
- Alice is able to find someone who let her use the network connection via a local interface.
- Ken and Alice agree on a contract, thus Alice has to accept Ken's conditions for sharing his network connection.

In the following there will be described an authentication scheme that does not require access to an infrastructure and which can be used in connection with an embodiment of the invention. It should, however, be mentioned that other authentication schemes may be used as well.

Authentication permits to identify the actor (in the above scenario Alice) that must be charged for the consumption of a service. Existing solutions defined to provide authentication in ad hoc networks often rely on neighbors to issue certificates. However, there is no guarantee that actors are always present in the network that are known in advance. This may prevent users' identities from being checked before certificates are issued thus giving no guarantee that these certificates bind valid users' identities to their public keys. Alternatively, the existing solutions rely on trusted third parties (TTP) that issue certificates. However, in the case of a congested mobile network, it may be interesting to reduce the number of tasks that have to be done by and over the mobile network. Therefore it can be preferable to use an authentication scheme that permits nodes to manage their certificates and public keys independently of any TTP.

Such a scheme is for example introduced in "G. Kounga and C. Schaefer. Non-repudiation for service accounting in ad hoc networks. In 7th International Workshop on Applications and Services in Wireless Networks - ASWN 2007, May 2007". It permits the user to generate *m* public/private key pairs in the ad hoc network that can be authenticated with a unique certificate issued during registration by a TTP. This certificate does not contain any public key. Instead, it binds the user's identity to a check value that is a hash code generated from the user's strong passphrase. Then, each key pair generated by the user is only valid during a specific time interval. Moreover, during that time interval, only the user that has been issued the certificate is able to generate a valid key pair from her passphrase that is bound to the check value, contained in that certificate. This permits any other user (e.g., Ken) to verify the authenticity of a public key by first checking with the TTP's public key the authenticity of the certificate associated to that public key. If the certificate is authentic, then the user continues his verification by, second, checking, based on his local clock, that the public key is used in the right time interval and that the public key is correctly linked to the check value contained in the corresponding certificate. This gives him the guarantee that the public key is used by the user that was issued the certificate by the TTP at registration.

If mobile phones do not have access to a TTP to perform authentication, reducing the public keys' lifetime permits to reduce the risk that a revoked public key is considered valid and authentic in the ad hoc network. Indeed, if no TTP is reachable that can send an updated list of certificates being invalid because the public/private key pairs have been revoked, users may have no guarantee that they are interacting with the right individual. This can for instance permit an attacker, who is using another user's public/private key pair, to buy a resource in the ad hoc network that will be charged to that other user.

With the solution defined in Kounga et al. key pairs are used that are only valid during the short period of time L. When the time interval is elapsed, the public key used by the attacker becomes automatically invalid and the attacker is not able to generate a valid key pair for the new time interval. Therefore, there is no need to distribute revocation information. An attacker can only use another user's key pair during the time interval when it is valid. However, the smaller that time interval is the harder it is for the attacker to be able to impersonate another user.
This permits to use these public/private key pairs to generate evidences that two users agreed on a contract and that the seller indeed provided to the buyer the resource that he requested

Further details about such an authentication method can be found in the European Patent application no. 06122041.4 titled "Method and Apparatus for Authentication" which is incorporated herein by reference.

It should, however, be mentioned that the aforementioned authentication scheme is only one authentication scheme which can be used in an embodiment of the invention and others may be used as well.

In the following there will be provided a high-level description of the protocol flow between the actors according to one embodiment of the invention:
1. Alice searches the ad hoc network for mobile phones that have network connectivity.
2. Alice chooses Ken from a list and asks Ken whether he agrees to share his network connectivity with her; for this Alice sends Ken a request message.
3. Ken sends his terms (e.g., 0.1 Euro/minute) to Alice as a reply message.
4. Alice agrees to Ken's terms, and sends back a contract signed with her private key.
5. Ken informs his MNO about the contract and establishes the connection for Alice.
6. A confirmation message is shown to Alice asking what kind of application she wants to use.
7. Alice chooses a browser application and connects to the CP server. After closing the connection, Ken sends the resulting accounting data to MNO's gateway server so that Alice can be charged as agreed in the contract.
8. The MNO gets the money from Alice and remunerates Ken.

In order for Alice and Ken to agree on a contract, the two actors have to mutually authenticate, have to generate keys to protect their communication, and have to generate evidences that the contract has been fulfilled. In the following these issues, in particular the generation of such evidences according to embodiments of the invention will be described in somewhat more detail.

At first the authentication in such ad hoc scenarios, then the negotiation of a contract and finally how to do accounting and generating evidences according to embodiments of the invention will be described.

If the technical conditions are met and Ken and Alice can agree on a contract then the following advantages for the involved actors are involved:
- Alice is able to access her CP server and to download content in spite of being not able to connect to a network operator.
- Ken is able to get some money from Alice while he does not need his mobile phone or even when he is busy on his phone.
- The MNO is able to support users even if its network is congested. The MNO is able to provide a better network coverage without installing additional hardware.

In the following the contract negotiation according to one embodiment will be described in somewhat more detail.

Basically, users who provide resources (e.g. connection resources or network connectivity) to other users, face some drawbacks doing so. Thus, it is preferable that there is a motivation for the user to provide resources.

A motivation can be that the user is remunerated for providing resources. As already noticed above, when offering network connectivity there are some issues to be considered:
- Communication costs: Depending on the user's contract with his MNO, communication charges are to be paid. In the case of a flat-rate subscription, a further parameter to be considered is whether the user is roaming in which case the flat-rate might not be applicable. And charges may be based on traffic volume or connection time.
- Mobile phone resources: Additional data traffic has an impact on the mobile phone itself Obviously, power is being consumed for handling the traffic. Further, it might be that other resources such as memory are used as well.

The latter item is a reason to compensate for network connectivity sharing even when a flat-rate applies. The former has an impact on how charging for resource usage is detailed in the contract but as well how the accounting of data traffic is being done which is discussed in the next section.

According to one embodiment the conditions for trading the resources are being set by the user himself. One reason for this is that it is only the user who can decide on the value of his resource. For instance, he may be roaming into the domain of a foreign MNO and thus network connectivity is charged differently compared when being connected to his own MNO.

In such a situation one also has to foresee the situation where people who want to buy resources, deny the agreed compensation; thus, the generation of evidences that the contract has been fulfilled is important.

In the following it is assumed that the actors, Alice and Ken, are mutually authenticated and that each actor is sharing the public key certification of the other. This may be achieved by running the authentication scheme according to Kounga et al. mentioned before. It should be noted that Ken and his MNO have authenticated when setting up network connectivity. The scheme might be technology dependent, i.e. different for WLAN and UMTS.

A contract according to one embodiment contains among other the following elements: the identifier of the seller, the identifier of the buyer, the terms agreed on (e.g., packet-based charging, prize) between seller and buyer as well as a unique contract identifier. The identification of seller and buyer can be by their respective certificates.

In order to guarantee the authenticity of the contract, the contract is encrypted to the private key of the; i.e. Ken sends initially a draft contract to Alice which he signs and encrypts the signed draft contract with Alice's public key.

After Alice has received the draft contract from Ken, she decrypts it and checks Ken's signature. If the signature is valid and she accepts the proposal then she generates a contract. This contract is signed by her and may be encrypted to the public key of Ken and sent to Ken. Upon receiving the contract, Ken decrypts it, signs it and may encrypt it to his MNO's and Alice public key before sending the contract to his MNO as well as Alice.

The result is that all involved actors have a valid copy of the agreed contract between Alice and Ken for later reference.

According to one embodiment contract negotiation comprises the following steps; for achieving contract authenticity refer to the previous section:
1. Alice gets a list of resource sellers by searching the ad hoc network.
2. Alice chooses the best resource seller (e.g. Ken) from the list (e.g., by checking the access speed), and she asks for getting his resource.
3. Ken sends his terms (draft contract) for selling his resource to Alice as a reply message.
4. If the terms are acceptable for Alice, she can continue this negotiation.
5. Alice generates the contract, signs it and sends it back.
6. Ken checks the contract and if he agrees, he signs it thus making it the agreed contract. He then sends it to the gateway server of the MNO.
7. Ken, Alice and the MNO set up the metering function for accounting traffic from and to Alice (via Ken and the MNO).
8. The communication channel for Alice is established by Ken. And Alice may start to use the communication channel.
9. Alice, Ken and MNO store the contract.

For simplicity, one may assume that Alice accepts Ken's offer, but one may foresee that negotiation of the contract may take several rounds. But, according to one embodiment finally a contract is agreed upon and signed by the involved actors.

According to one embodiment a MNO requires evidences to do charging and billing on behalf of others. This means the MNO needs to be sure that the claimed evidences are correct and if they are correct the MNO does not have to have any additional checks.

As mentioned, both actors (Alice and Ken) have signed a contract where they agree that the connection provider, in the present embodiment Ken, is doing the metering of the resource usage and collecting the evidences. These are later presented to the MNO by Ken. Furthermore the contract according to one embodiment determines how the metering is done e.g., a volume- or time-based metering.

Both actors (Alice and Ken) want to minimize costs. Alice, for instance, could falsely claim that she did not receive all packets from Ken. Another possibility for defrauding is that Ken could falsely claim that he forwarded more packets from Alice to the network than Alice actually sent. In the following there will be described an embodiment using a scheme where the necessary evidences are generated so that these false claims cannot hold. According to one embodiment the MNO is considered to be trusted so evidences are only needed on the connection between Alice, Ken and the MNO which means that the scheme does not have to be applied beyond the MNO.

In the following the generation of evidences according to embodiments of the invention will be described.

One may differentiate between two cases: one is that Alice receives content from her content provider. The second is that Alice uploads content to the content provider. However, for either case it is Ken who collects all the evidences. The evidences themselves are generated by Alice and the MNO, respectively. The details will be explained in the following.

### Case 1: Alice receives packets

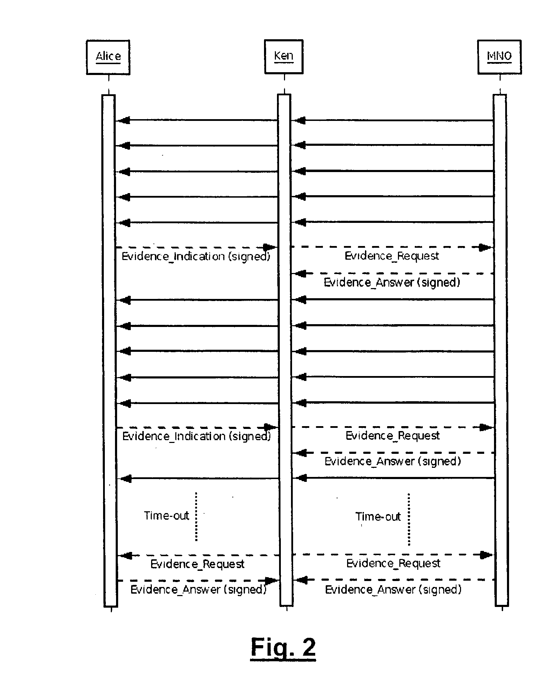

When Ken is sending packets to Alice he is expecting an Evidence_Indication (EI) packet (see Fig. 2) after some time depending on the contract, e.g. for a time-based contract Alice sends every minute an EI or after having received a certain number of bytes (in case of a volume based charging or remuneration scheme). The evidence indication according to one embodiment comprises an indication of the extent to which the shared connection has been used by Alice, e.g. an indication of the number of received packets or an indication of the connection time (e.g. such as a time stamp). If Ken does not receive an EI he stops sending packets. So Alice either can send an EI and receives further on packets or Alice does not receive any packets anymore. The EI is signed by Alice and is thus a valid evidence as both actors have already been authenticated against each other (using the authentication scheme as described before). The signature is verified by Ken and, if the signature is valid, the EI is accepted as evidence.

The protocol applied for the connection between Ken and the MNO is the same as the one between Alice and Ken when Alice is sending (see case 2 below), i.e. Ken sends an Evidence_Request (ER) under the same conditions, time- or volume-based, as Alice sends the EI. According to one embodiment this means that the Evidence_Request (ER) comprises an indication of the extent to which the shared connection has been offered by Ken in the same way as the Evidence_Indication (EI) received from the third node. Such an extent indication may e.g. comprise an indication of the number of transferred packets or of the connection time (e.g. by means of a time stamp). With such an Evidence_Request (ER) Ken requests the MNO to confirm the extent to which he has actually offered the shared connection to Alice. If all parties behave correctly, the extent indication sent by Ken with his Evidence_Request (ER) to the MNO corresponds to the extent indication comprised in the Evidence_Indication (EI) sent by Alice, which then means then that Ken has provided the shared connection to exactly the extent which was confirmed by Alice in her Evidence_Indication. The MNO answers to this ER with an Evidence_Answer (EA). The evidence answer confirms the extent of the connection sharing provided by Ken. According to one embodiment for that purpose it comprises also indication of the extent to which the shared connection has been offered by Ken, e.g. an indication of the number of transferred packets or of the connection time, to thereby confirm the extent of the connection sharing provided by Ken. In this manner Ken has gathered all the evidences and can prove to Alice that he has forwarded all incoming packets addressed to Alice. This is achieved by matching or correlating the evidences from Alice and the MNO , or more particular, the extent indications contained therein.

According to one embodiment the evidence request ER sent by Ken to the MNO may comprise the EI signed by Alice and received by Ken. The MNO in one embodiment may then thus sign the thus received ER and send it back to Ken as an evidence answer which is in fact an evidence indication confirming that the extent to which Ken has actually offered the shared connection coincides with the extent indication contained in the evidence indication from Alice. In such a case the MNO according to one embodiment is able to identify the extent indication as being generated by Alice by knowing Alice's public key. The evidence request may further according to one embodiment also be signed by Ken, and the MNO then using Ken's public key identifies the ER as being sent by Ken.

In any case, according to one embodiment the evidence answer may be generated based on signing the evidence request to confirm that the extent of connection sharing as claimed in the evidence request indeed has taken place. As a matter of course, the MNO will perform a corresponding check and only if the result is positive it will generate the evidence answer.

It should be noted here that the evidence answer described before is actually also in fact an evidence indication, albeit a specific one, namely one which is sent in response to an evidence request.

According to one embodiment an EI or EA (among other elements) contains one or more of the following: the contract identifier, the number of bytes received or sent as well as a timestamp. Then based on the timestamp, EI or EA of either Alice or the MNO can be matched. The timestamp (or a similar time indication) can also be used as an extent indication which indicates the extent of the connection sharing in case of a time based charging or remuneration scheme. In case of a packet based remuneration/charging scheme this task of matching (i.e. checking whether the extent indications match) may be fulfilled by the number of received (or sent) packets.

According to one embodiment, in the packet based accounting case Ken is additionally running a timer which is reset after every EI received. The timer fires when Ken has not forwarded packets for some time but the packet based trigger could not fire due to missing packets. Thus when the timer trigger fires Ken also sends an ER to Alice, and to the MNO, to which Alice and the MNO respond to by a signed EA.

As the MNO is a trusted actor the protocol does not have to be applied on the connection between MNO and the CP server.

It should be noted that according to one embodiment the EI and EA are exchanged protected, i.e. signed and according to one embodiment also encrypted. Thus, they cannot be tampered and forged.

### Case 2: Alice sends packets

Now an embodiment where Alice sends packets will be described.

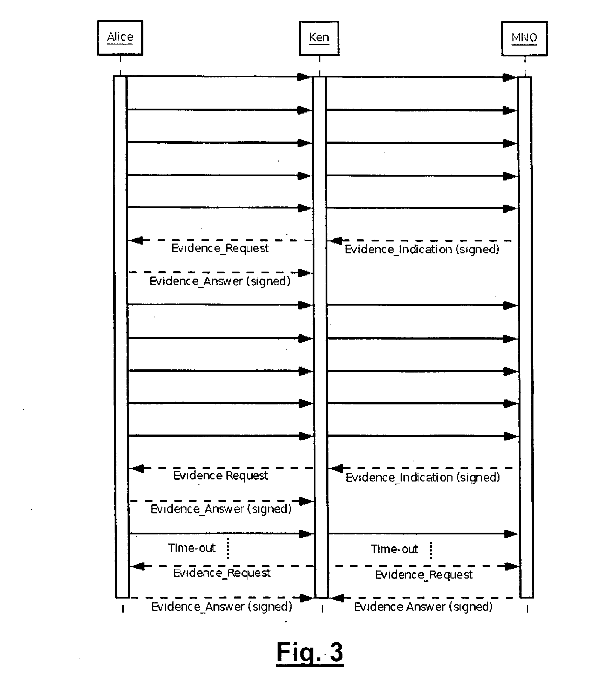

When Alice sends packets to the CP server via Ken it is Ken's turn to send an Evidence_Request (ER) (see Fig. 3) to Alice after some time (or after some packets having been received). The evidence request according to one embodiment comprises an extent indication which is an indication of the extent to which the shared connection has been offered by Ken. In this case Alice replies with a signed Evidence_Answer (EA) if she agrees that she has send the packets to be forwarded by Ken in accordance with the extent indication contained in the Evidence_Request (ER). Ken verifies the signature and accepts the signed EA as evidence if valid. If Alice does not return the signed EA Ken stops forwarding packets received from Alice. The trigger for Ken to send an ER may be the same as the one for Alice when she receives packets, i.e. if time-based then Ken may send every minute such an ER.

Moreover, the extent indication may take the same form as described in the foregoing embodiments.

As above Ken, according to one embodiment has in the packet based accounting case an additional timer that fires after he has not received any packets from Alice for some time but the packet trigger can not fire yet due to missing packets. If the timer fires Ken sends an ER to Alice as well as to the MNO and receives from both a signed EA.

The protocol running between the MNO and Ken is the same as the one between Alice and Ken described for the embodiment where Alice receives packets. Thus all evidences are collected by Ken and he can prove to Alice that he forwarded all outgoing packets to the MNO and all incoming packets to Alice. Having all the evidences, Ken can according to one embodiment do accounting and charging between himself and Alice without involving a third party. According to another embodiment he may forward the gathered evidences to another party, e.g. a TTP or a MNO for accounting which may include charging and/or remuneration.

To summarize the two cases, one where Alice sends and one where Alice receives data, in both cases the destination (in case 1 Alice, in case 2 the MNO) sends an evidence indication to Ken and based thereupon Ken (the node sharing the connection) sends an evidence request to the originating node ( in case 1 the MNO or content provider, in case 2 Alice) which then responds with an evidence answer confirming the correct transmission (if it actually took place).

### Case 3: Un-trusted Network Domain

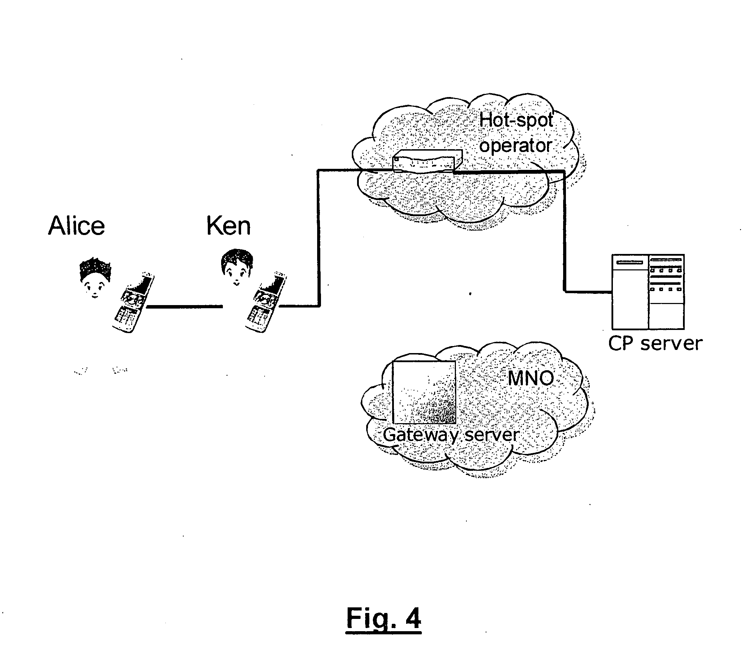

One may foresee that Ken's network connection is not with a MNO, meaning that his network connection is terminated in a network not operated by his MNO or a roaming MNO (e.g., a hot-spot operator as shown e.g. in Fig. 4).

For a *trusted* network operator one may assume that the operational processes, especially for metering, accounting, charging and billing, follow commonly agreed standards; technical standards but as well any legal standards. Specifically, and related to the proposed scheme for the evidence generation, a trusted network operator implements correctly the proposed scheme. All other networks are regarded as untrusted networks. A, un-trusted network is thus one from which the user does not have any pre-established relationship. For instance, this may be when connecting to a hot-spot for a first time.

To cope with un-trusted networks, one has to solve the problem where to generate the evidences to be sent to Ken. The solution is that a new trust anchor is decided. In the situation depicted in Fig. 4 the trust anchor is the content provider and not the hot-spot operator. This means that the protocol of Fig. 3 is run between Alice, Ken and the content provider. Alternatively, it can be any other network between the un-trusted network and the content provider if the connection between the network and the content provider consists of trusted networks (as defined above); e.g., it might be an operator providing backbone connectivity between the hot-spot operator and the content provider.

The trigger to repeatedly send an ER or EI according to one embodiment depends on the contract agreed upon. If Ken has a flat-rate then a trigger based on time might be important as the most important resource spent by him is the battery life of his device. If Ken has a contract with his operator based on a charging per packet tariff then the trigger fires after some amount of packets sent. This trigger can be similar to the sliding-window algorithm used with TCP. At the beginning the trigger fires after a few packets and increases the counter for the next trigger if everything goes well up to some threshold. Using the sliding-window algorithm reduces the computational burden of the proposed scheme. Furthermore the packet based trigger is supported by a timer to support the situation where the data transfer is finished but the packet trigger has not to fire yet.

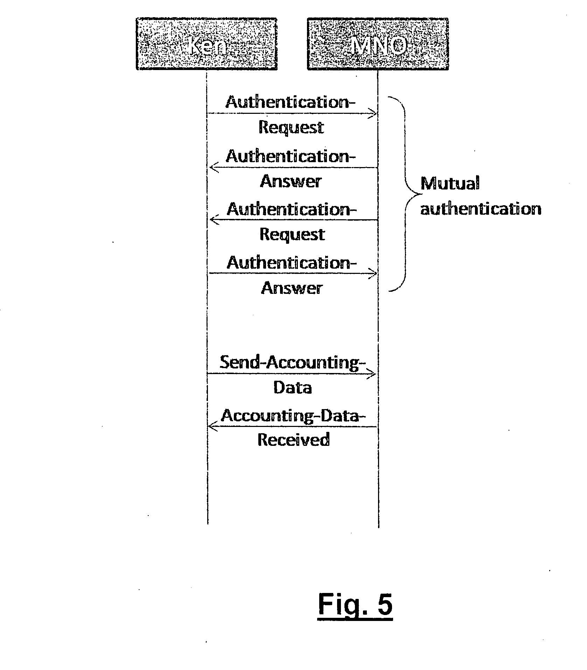

Regarding remuneration, two scenarios are possible to actually remunerate Ken. In the first scenario Ken sends all the accounting data and the evidences to the MNO (as shown e.g. in Fig. 5). The MNO uses this data for charging and billing. This means the MNO is charging Alice based on the contract data between Alice and Ken and on the accounting data (including evidences) received from Ken. Then Ken is remunerated by the MNO, for example, by reducing Ken's bill. As all the necessary evidences for charging and billing are presented by Ken, the MNO does not have to do some additional checks on the data And, since the MNO has some administrative overhead performing the charging and billing, it may get some compensation for this effort as well. This makes the proposed scheme attractive for an MNO.

In the second scenario Ken is doing the charging and billing himself. Ken sends the bill to Alice who then pays using, for example, a purse-to-purse transaction; thus, there is no third party involved. Using purse-to-purse transactions it is also possible to think about paying after every EI or ER so that a sudden connection drop is no problem and Ken is remunerated for all provided services. Such a purse-to-purse transaction may be based on the specification given in F. C. Body. Intersector electronic purse and purchase device. Technical Report PP/01/01, Mar. 2001.

In the following the proposed scheme is evaluated against the requirement that defrauding by either actor is not possible. It should be noted that the evidences are with Ken.

### Defrauding case 1

Alice may pretend:
- Not having received packets: But Ken can prove that he received an EI from Alice. This implies that Alice confirmed having received a number of packets. And this contradicts her claim of not having received packets.
- Not having received all packets: But Ken can prove that he received an EA from the MNO as well as an EI from Alice that match according to the timestamp and number of bytes.

Ken may pretend:
- Forwarded all packets from MNO: Ken may have an EA from the MNO but does not have a matching EI from Alice if he did not really forward all packets; this contradicts his claim.
- Forwarded more packets then confirmed by Alice: Ken cannot identify two matching EI and EA from Alice and the MNO which again contradicts his claim.

### Defrauding case 2

Alice may pretend:
- Not all packets were forwarded by Ken: With the evidence sent by the MNO Ken can prove that he forwarded Alice's packets to the MNO. And in combination with the evidences sent by Alice, Ken has all the evidences that he forwarded all packets.

On the other hand, Ken may pretend:
- Having forwarded all packets (but actually he did not): Alice sends packets to Ken and, thus, she as well generates some EA which Ken needs to prove what he is claiming. However, if Ken does not forward packets to the MNO the MNO is not generating and sending EI. Therefore, Ken does not have the EI from the MNO and thus cannot prove that he forwarded all packets which contradicts his claim.

Through the sending of EI and EA packets both users and the MNO agree on the exchanged packets between them. So Alice pays only for what has been exchanged between them. And Ken is remunerated for those packets he forwarded. Defrauding as discussed above is not possible with the proposed scheme.

### Defrauding Case 3

There is the possibility that Alice and any other entity between Ken and (including) her content provider may co-operate and try to defraud Ken. However, this risk is coped with as Ken is expecting signed evidences from Alice and the content provider, if the content provider is the trust anchor, (refer to Figs. 2 and 3). And if these evidences are not received by Ken, he stops forwarding packets to the network or to Alice. Thus, Ken's risk to loose incentives is minimized.

The described embodiments have a minimum impact with respect to required software to be deployed on the mobile devices of Alice, Ken and the gateway server of the MNO.

Actually, for triggering the sending of an EI or ER a metering software is required on all systems. Furthermore the forwarding of packets is to be extended so that EI, EA and ER are generated. These are the only requirements of the scheme to run, and they can be implemented into existing systems without much difficulty.

## Claims

1. A method for gathering evidence that a connection resource in a mobile network has been shared, said connection resource being a connection between a first node and a second node which is a trusted third party, and said connection resource being offered by said first node to be used by a third node to enable said third node through said shared connection to connect to said second node via said first node, wherein method comprises:
repeatedly sending by said third node an evidence indication comprising an extent indication which indicates the extent to which said third node has made use of said connection by using the connection between said third node and said first node, said evidence indication being signed by said third node;
for each evidence indication sent by said third node, sending a corresponding evidence indication from said second node to said first node, said evidence indication comprising an extent indication which indicates the extent to which said third node has made use of said connection by using the connection between said first node and said second node, said evidence indication being signed by said second node;
pairwise matching said evidence indication from said third node and its corresponding evidence indication from said second node by mutually comparing their respective extent indications to determine the extent by which said shared connection has been used and to avoid fraud when performing billing or remuneration for the extent to which the shared connection has been used;
wherein said extent indication comprises one or more of the following:
the number of bytes received or sent;
a time indication of the time for which the connection was used.

2. The method of claim 1, further comprising:
sending by said first node to said second node an Evidence_Request (ER) which comprises an indication of the extent to which the shared connection has been offered by said first node to said third node to thereby request said second node to confirm the extent to which the shared connection has been offered by said first node to said third node, said indication of extent sent by said first node corresponding to the indication of extent contained in said evidence indication sent from said third node to said first, and
confirming said extent mentioned in said Evidence_Request (ER) by said evidence indication forming an evidence answer sent by said second node to said first node.

3. The method of one of claims 1 to 2, wherein
the charging and/or remuneration scheme is packet or volume based, and the said first node is running a packet based trigger which fired for sending an evidence request, and
said first node is additionally running a timer which is reset after every evidence indication received and which fires to trigger the sending of an evidence request when said first node has not forwarded or received packets for some time but said packet based trigger could not fire due to missing packets.

4. The method of one of claims 1 to 3, further comprising:
sending by said first node to said third node an Evidence_Request (ER) which comprises an indication of the extent to which the shared connection has been offered by said first node to said third node to thereby request said third node to confirm the extent to which the shared connection has been offered by said first node to said third node, and
confirming said extent mentioned in said Evidence_Request (ER) by said evidence indication forming an evidence answer sent by said third node to said first node.

5. The method of one of claims 1 to 4, wherein
if said second node is not a trusted third party a trusted anchor is chosen and the method for gathering evidences is run between said first node, said third node and said trusted anchor while the shared connection is the connection between said first and said second node.

6. The method of one of the preceding claims, wherein
charging and/or remuneration is performed based on a contract concluded by electronically exchanging signed messages between said first and said third node, and wherein the fulfillment of said contract is proven by said pairwise matching of said evidence indication and said evidence answer to enable a correct charging and/or remuneration.

7. The method of one of the preceding claims, wherein
charging and/or remuneration is performed based on a metering of the usage of the shared connection, said metering being performed by one or more of the nodes involved.

8. The method of claims 6 or 7, wherein
said contract comprises the unique contract identifier, the identifier of the seller, the identifier of the buyer, and the terms agreed on between seller and buyer and the identification of seller and buyer, e.g. by their respective certificates, wherein in order to guarantee the authenticity of the contract said contract is encrypted using the private key of the node that negotiated it such that said first node sends initially a draft contract to said third node which he signs and may encrypts the signed draft contract with the third nodes' public key, wherein after said third node has received the draft contract from said first node it may decrypts it and checks the first nodes' signature, and if the signature is valid and the third node accepts the proposed terms then it generates a contract signed by it and may encrypt the contract with the public key of said first node before sending it to said first node which upon receiving the contract may decrypt it, signs it and may encrypt it with the public keys of the second node and the third node before sending the contract to the second node and the third node so that all involved actors have a valid copy of the agreed contract.

9. The method of one of the preceding claims, wherein
said repeated sending of evidence indications is based on a trigger which fires based on one or more of the following conditions:
expiration of a certain period of time;
transmission or reception of a certain volume of data.

10. An apparatus for gathering evidence that a connection resource in a mobile network has been shared, said connection resource being a connection between a first node and a second node which is a trusted third party, and said connection resource being offered by said first node to be used by a third node to enable said third node through said shared connection to connect to said second node via said first node, wherein said apparatus comprises:
a module for repeatedly sending by said third node an evidence indication comprising an extent indication which indicates the extent to which said third node has made use of said connection by using the connection between said third node and said first node, said evidence indication being signed by said third node;
a module for, for each evidence indication sent by said third node, sending a corresponding evidence indication from said second node to said first node, said evidence indication comprising an extent indication which indicates the extent to which said third node has made use of said connection by using the connection between said first node and said second node, said evidence indication being signed by said second node;
a module for pairwise matching said evidence indication from said third node and its corresponding evidence indication from said second node by mutually comparing their respective extent indications to determine the extent by which said shared connection has been used and to avoid fraud when performing billing or remuneration for the extent to which the shared connection has been used; wherein said extent indication comprises one or more of the following:
the number of bytes received or sent; a time indication of the time for which the connection was used.

11. The apparatus of claim 10, further comprising:
a module for carrying out a method according to one of claims 1 to 9.

12. A computer program comprising program code which enables a computer to carry out a method according to one of claims 1 to 9.

## Patentansprüche

1. Verfahren zum Sammeln eines Beweises, dass eine Verbindungsressource in einem mobilen Netzwerk geteilt worden ist, wobei die Verbindungsressource eine Verbindung zwischen einem ersten Knoten und einem zweiten Knoten ist, der eine vertrauenswürdige dritte Partei ist, und wobei die Verbindungsressource vom ersten Knoten angeboten wird, um von einem dritten Knoten verwendet zu werden und es dem dritten Knoten durch die geteilte Verbindung zu ermöglichen, den zweiten Knoten über den ersten Knoten zu verbinden, wobei das Verfahren umfaßt:
wiederholtes Senden einer Beweisindikation, die eine Ausmaßindikation umfaßt, die das Ausmaß angibt, in dem der dritte Knoten von der Verbindung durch die Verwendung der Verbindung zwischen dem dritten Knoten und dem ersten Knoten Gebrauch gemacht hat, durch den dritten Knoten, wobei die Beweisindikation vom dritten Knoten signiert wird;
Senden einer entsprechenden Beweisindikation vom zweiten Knoten zum ersten Knoten für jede vom dritten Knoten gesendete Beweisindikation, wobei die Beweisindikation eine Ausmaßindikation umfaßt, die das Ausmaß angibt, in dem der dritte Knoten unter Verwendung der Verbindung zwischen dem ersten Knoten und dem zweiten Knoten von der Verbindung Gebrauch gemacht hat, wobei die Beweisindikation vom zweiten Knoten signiert wird;
paarweises Abgleichen der Beweisindikation vom dritten Knoten und der entsprechenden Beweisindikation vom zweiten Knoten durch gegenseitiges Vergleichen ihrer entsprechenden Ausmaßindikationen, um das Ausmaß zu ermitteln, in dem die geteilte Verbindung verwendet worden ist, und um Betrug zu vermeiden, wenn die Rechnungsstellung oder Bezahlung für das Ausmaß durchgeführt wird, in dem die geteilte Verbindung verwendet worden ist;
wobei die Ausmaßindikation eines oder mehreres aus dem folgenden umfaßt:
die Anzahl der empfangenen oder gesendeten Bytes;
eine Zeitindikation der Zeit, für die die Verbindung benutzt wurde.

2. Verfahren nach Anspruch 1, ferner umfassend:
Senden einer Beweis_Anfrage (BA), die eine Indikation des Ausmaßes umfaßt, in dem die geteilte Verbindung dem dritten Knoten durch den ersten Knoten angeboten worden ist, durch den ersten Knoten an den zweiten Knoten, um **dadurch** anzufordern, dass der zweite Knoten das Ausmaß bestätigt, in dem die geteilte Verbindung dem dritten Knoten durch den ersten Knoten angeboten worden ist, wobei die Indikation des Ausmaßes, die vom ersten Knoten gesendet wurde, der Indikation des Ausmaßes entspricht, die in der Beweisindikation enthalten ist, die vom dritten Knoten an den ersten gesendet wurde; und
Bestätigen des in der Beweis_Anforderung (BA) erwähnten Ausmaßes, indem die Beweisindikation eine Beweisantwort erzeugt, die vom zweiten Knoten an den ersten Knoten gesendet wird.

3. Verfahren nach einem der Ansprüche 1 bis 2, wobei
das Berechnungs- und/oder Bezahlungsschema paket- oder volumenbasiert ist, und wobei der erste Knoten einen paketbasierten Trigger betreibt, der zum Senden einer Beweisanforderung ausgelöst wird, und
der erste Knoten zusätzlich einen Timer betreibt, der nach jeder empfangenen Beweisindikation zurückgesetzt wird, und der ausgelöst wird, um das Senden einer Beweisanforderung zu triggern, wenn der erste Knoten für einige Zeit keine Pakete weitergeleitet oder empfangen hat, aber der paketbasierte Trigger aufgrund fehlender Pakete nicht ausgelöst werden konnte.

4. Verfahren nach einem der Ansprüche 1 bis 3, ferner umfassend:
Senden einer Beweis_Anforderung (BA), die eine Indikation des Ausmaßes umfaßt, in dem die geteilte Verbindung dem dritten Knoten durch den ersten Knoten angeboten worden ist, durch den ersten Knoten an den dritten Knoten, um **dadurch** anzufordern, dass der dritte Knoten das Ausmaß bestätigt, in dem die geteilte Verbindung dem dritten Knoten durch den ersten Knoten angeboten worden ist; und
Bestätigen des in der Beweis_Anforderung (BA) erwähnten Ausmaßes, indem die Beweisindikation eine Beweisantwort erzeugt, die vom dritten Knoten an den ersten Knoten gesendet wird.

5. Verfahren nach einem der Ansprüche 1 bis 4, wobei,
wenn der zweite Knoten keine vertrauenswürdige dritte Partei ist, ein vertrauenswürdiger Anker gewählt und das Verfahren zum Sammeln von Beweisen zwischen dem ersten Knoten, dem dritten Knoten und dem vertrauenswürdigen Anker ausgeführt wird, wobei die geteilte Verbindung die Verbindung zwischen dem ersten und dem zweiten Knoten ist.

6. Verfahren nach einem der vorhergehenden Ansprüche, wobei
die Berechnung und/oder Bezahlung basierend auf einem Vertrag durchgeführt wird, der durch den elektronischen Austausch signierter Nachrichten zwischen dem ersten und dem dritten Knoten abgeschlossen wurde, und wobei die Erfüllung des Vertrags durch das paarweise Abgleichen der Beweisindikation und der Beweisantwort bewiesen wird, um eine korrekte Berechnung und/oder Bezahlung zu ermöglichen.

7. Verfahren nach einem der vorhergehenden Ansprüche, wobei
die Berechnung und/oder Bezahlung basierend auf der Messung der Verwendung der geteilten Verbindung durchgeführt wird, wobei die Messung von einem oder mehreren der beteiligten Knoten durchgeführt wird.

8. Verfahren nach Anspruch 6 oder 7, wobei
der Vertrag den eindeutigen Vertragsidentifizierer, den Identifzierer des Verkäufers, den Identifizierer des Käufers und die Bedingungen, über die sich der Verkäufer und der Käufer geeinigt haben, sowie die Identifikation des Verkäufers und des Käufers, z.B. durch ihre entsprechenden Zertifikate, umfaßt, wobei, um die Authentizität des Vertrags zu gewährleisten, der Vertrag unter Verwendung des privaten Schlüssels des Knotens verschlüsselt wird, der ihn vermittelt hat, so dass der erste Knoten zunächst einen Vertragsentwurf an den dritten Knoten sendet, den er signiert, wobei er den signierten Vertragsentwurf mit dem öffentlichen Schlüssel des dritten Knotens verschlüsseln kann, wobei, nachdem der dritte Knoten den Vertragsentwurf vom ersten Knoten empfangen hat, er diesen entschlüsseln kann und die Signatur des ersten Knotens überprüft und, wenn die Signatur gültig ist und der dritten Knoten die vorgeschlagenen Bedingungen akzeptiert, dann einen durch ihn signierten Vertrag erzeugt, wobei er den Vertrag mit dem öffentlichen Schlüssel des ersten Knotens verschlüsseln kann, bevor er ihn an den ersten Knoten sendet, der den Vertrag bei Empfang entschlüsseln kann, ihn signiert und ihn mit den öffentlichen Schlüsseln des zweiten Knotens und des dritten Knotens verschlüsseln kann, bevor er den Vertrag an den zweiten Knoten und den dritten Knoten sendet, so dass alle beteiligten Aktoren eine gültige Kopie der Vertagsvereinbarung haben.

9. Verfahren nach einem der vorhergehenden Ansprüche, wobei
das wiederholte Senden von Beweisindikationen auf einem Trigger basiert, der basierend auf einer oder mehrerer der folgenden Bedingungen ausgelöst wird:
Ablauf einer bestimmten Zeitperiode;
Übertragung oder Empfang eines bestimmten Datenvolumens.

10. Vorrichtung zum Sammeln eines Beweises, dass eine Verbindungsressource in einem mobilen Netzwerk geteilt worden ist, wobei die Verbindungsressource eine Verbindung zwischen einem ersten Knoten und einem zweiten Knoten ist, der eine vertrauenswürdige dritte Partei ist, und wobei die Verbindungsressource vom ersten Knoten angeboten wird, um von einem dritten Knoten verwendet zu werden und es dem dritten Knoten durch die geteilte Verbindung zu ermöglichen, den zweiten Knoten über den ersten Knoten zu verbinden, wobei die Vorrichtung umfaßt:
ein Modul zum wiederholten Senden einer Beweisindikation, die eine Ausmaßindikation umfaßt, die das Ausmaß angibt, in dem der dritte Knoten von der Verbindung unter Verwendung der Verbindung zwischen dem dritten Knoten und dem ersten Knoten Gebrauch gemacht hat, durch den dritten Knoten, wobei die Beweisindikation vom dritten Knoten signiert wird;
ein Modul zum Senden einer entsprechenden Beweisindikation vom zweiten Knoten zum ersten Knoten für jede vom dritten Knoten gesendete Beweisindikation, wobei die Beweisindikation eine Ausmaßindikation umfaßt, die das Ausmaß angibt, in dem der dritte Knoten von der Verbindung unter Verwendung der Verbindung zwischen dem ersten Knoten und dem zweiten Knoten Gebrauch gemacht hat, wobei die Beweisindikation vom zweiten Knoten signiert wird;
ein Modul zum paarweisen Abgleichen der Beweisindikation vom dritten Knoten und der entsprechenden Beweisindikation vom zweiten Knoten durch gegenseitiges Vergleichen ihrer entsprechenden Ausmaßindikationen, um das Ausmaß zu ermitteln, in dem die geteilte Verbindung verwendet worden ist, und um Betrug zu vermeiden, wenn die Rechnungsstellung oder Bezahlung für das Ausmaß durchgeführt wird, in dem die geteilte Verbindung verwendet worden ist;
wobei die Ausmaßindikation eines oder mehreres aus dem folgenden umfaßt:
die Anzahl der empfangenen oder gesendeten Bytes;
eine Zeitindikation der Zeit, für die die Verbindung benutzt wurde.

11. Vorrichtung nach Anspruch 10, ferner umfassend:
ein Modul zum Ausführen eines Verfahrens nach einem der Ansprüche 1 bis 9.

12. Computerprogramm umfassend Programmcode, der es einem Computer ermöglicht, ein Verfahren gemäß einem der Ansprüche 1 bis 9 auszuführen.

## Revendications

1. Procédé pour recueillir des preuves qu'une ressource de connexion dans un réseau mobile a été partagée, ladite ressource de connexion étant une connexion entre un premier noeud et un deuxième noeud qui est un tiers sécurisé, et ladite ressource de connexion étant proposée par ledit premier noeud à utiliser par un troisième noeud pour permettre audit troisième noeud par le biais de ladite connexion partagée de se connecter audit deuxième noeud par l'intermédiaire dudit premier noeud, dans lequel le procédé comprend les étapes consistant à :
envoyer à répétition par ledit troisième noeud une indication de preuve comprenant une indication d'étendue qui indique l'étendue de l'utilisation de ladite connexion par ledit troisième noeud en utilisant la connexion entre ledit troisième noeud et ledit premier noeud, ladite indication de preuve étant signée par ledit troisième noeud ;
pour chaque indication de preuve envoyée par ledit troisième noeud, envoyer une indication de preuve correspondante dudit deuxième noeud audit premier noeud, ladite indication de preuve comprenant une indication d'étendue qui indique l'étendue de l'utilisation de ladite connexion par ledit troisième noeud en utilisant la connexion entre ledit premier noeud et ledit deuxième noeud, ladite indication de preuve étant signée par ledit deuxième noeud ;
faire correspondre en paire ladite indication de preuve dudit troisième noeud et son indication de preuve correspondante dudit deuxième noeud en comparant mutuellement leurs indications d'étendue respectives pour déterminer l'étendue de l'utilisation de ladite connexion partagés et pour éviter toute fraude en effectuant la facturation ou la rémunération de l'étendue de l'utilisation de la connexion partagée ;
dans lequel ladite indication d'étendue comprend un ou plusieurs de ce qui suit :
le nombre d'octets reçus ou envoyés ;
une indication de temps de la durée d'utilisation de la connexion.

2. Procédé selon la revendication 1, comprenant en outre les étapes consistant à :
envoyer par ledit premier noeud audit deuxième noeud une demande de preuve Evidence_Request (ER) qui comprend une indication de l'étendue de la proposition de la connexion partagée par ledit premier noeud audit troisième noeud pour demander de ce fait audit deuxième noeud de confirmer l'étendue de la proposition de la connexion partagée par ledit premier noeud audit troisième noeud, ladite indication d'étendue envoyée par ledit premier noeud correspondant à l'indication d'étendue contenue dans ladite indication de preuve envoyée dudit troisième noeud audit premier noeud, et
confirmer ladite étendue mentionnée dans ladite demande de preuve Evidence_Request (ER) par ladite indication de preuve en formant une réponse de preuve envoyée par ledit deuxième noeud audit premier noeud.

3. Procédé selon l'une des revendications 1 à 2, dans lequel
le schéma de facturation et/ou de rémunération est basé sur les paquets ou le volume et ledit premier noeud exécute un déclencheur basé sur les paquets qui se déclenche pour envoyer une demande de preuve, et
ledit premier noeud exécute en outre une temporisation qui est réinitialisée après chaque indication de preuve reçue et qui déclenche l'envoi d'une demande de preuve lorsque ledit premier noeud n'a pas transféré ou reçu des paquets depuis un certain temps mais ledit déclencheur basé sur les paquets ne s'est pas déclenché en raison de paquets manquants.

4. Procédé selon l'une des revendications 1 à 3, comprenant en outre les étapes consistant à :
envoyer par ledit premier noeud audit troisième noeud une demande de preuve Evidence_Request (ER) qui comprend une indication de l'étendue de la proposition de la connexion partagée par ledit premier noeud audit troisième noeud pour demander de ce fait audit troisième noeud de confirmer l'étendue de la proposition de la connexion partagée par ledit premier noeud audit troisième noeud, et
confirmer ladite étendue mentionnée dans ladite demande de preuve Evidence_Request (ER) par ladite indication de preuve en formant une réponse de preuve envoyée par ledit troisième noeud audit premier noeud.

5. Procédé selon l'une des revendications 1 à 4, dans lequel
si ledit deuxième noeud n'est pas un tiers sécurisé, un ancrage sécurisé est choisi et le procédé pour recueillir des preuves est exécuté entre ledit premier noeud, ledit troisième noeud et ledit ancrage sécurisé, alors que la connexion partagée est la connexion entre ledit premier noeud et ledit deuxième noeud.

6. Procédé selon l'une des revendications précédentes, dans lequel
la facturation et/ou la rémunération sont effectuées sur la base d'un contrat conclu en rechangeant électroniquement des messages signés entre ledit premier noeud et ledit troisième noeud, et dans lequel l'exécution dudit contrat est prouvée par ladite correspondance en paire de ladite indication de preuve et de ladite réponse de preuve pour permettre une facturation correcte et/ou une rémunération correcte.

7. Procédé selon l'une des revendications précédentes, dans lequel
la facturation et/ou la rémunération sont effectuées sur la base d'une mesure de l'utilisation de la connexion partagée, ladite mesure étant effectuée par un ou plusieurs des noeuds impliqués.

8. Procédé selon les revendications 6 ou 7, dans lequel
ledit contrat comprend l'identifiant de contrat unique, l'identifiant du vendeur, l'identifiant de l'acheteur et les termes convenus entre le vendeur et l'acheteur et l'identification du vendeur et de l'acheteur, par exemple par leurs certificats respectifs, dans lequel pour garantir l'authenticité du contrat ledit contrat est crypté en utilisant la clé privée du noeud qui l'a négocié de sorte que ledit premier noeud envoie initialement un avant-projet de contrat audit troisième noeud qu'il signe et peut crypter l'avant-projet de contrat signé avec la clé publique du troisième noeud, dans lequel après que ledit troisième noeud a reçu l'avant-projet de contrat dudit premier noeud, il peut le décrypter et contrôler la signature du premier noeud et si la signature est valable et le troisième noeud accepte les termes proposés, alors il génère un contrat signé par lui-même et il peut crypter le contrat avec la clé publique dudit premier noeud avant de l'envoyer audit premier noeud qui à la réception du contrat peut le décrypter, le signe et peut le crypter avec les clés publiques du deuxième noeud et du troisième noeud avant d'envoyer le contrat au deuxième noeud et au troisième noeud de sorte que toutes les parties prenantes aient une copie valable du contrat accepté.

9. procédé selon l'une des revendications précédentes, dans lequel
ledit envoi répété d'indications de preuves est basé sur un déclencheur qui se déclenche sur la base d'une ou plusieurs des conditions suivantes :
expiration d'une certaine période de temps ;
transmission ou réception d'un certain volume de données.

10. Appareil pour recueillir des preuves qu'une ressource de connexion dans un réseau mobile a été partagée, ladite ressource de connexion étant une connexion entre un premier noeud et un deuxième noeud qui est un tiers sécurisé, et ladite ressource de connexion étant proposée par ledit premier noeud à utiliser par un troisième noeud pour permettre audit troisième noeud par le biais de ladite connexion partagée de se connecter audit deuxième noeud par l'intermédiaire dudit premier noeud, dans lequel l'appareil comprend :
un module pour envoyer à répétition par ledit troisième noeud une indication de preuve comprenant une indication d'étendue qui indique l'étendue de l'utilisation de ladite connexion par ledit troisième noeud en utilisant la connexion entre ledit troisième noeud et ledit premier noeud, ladite indication de preuve étant signée par ledit troisième noeud ;
un module pour, pour chaque indication de preuve envoyée par ledit troisième noeud, envoyer une indication de preuve correspondante dudit deuxième noeud audit premier noeud, ladite indication de preuve comprenant une indication d'étendue qui indique l'étendue de l'utilisation de ladite connexion par ledit troisième noeud en utilisant la connexion entre ledit premier noeud et ledit deuxième noeud, ladite indication de preuve étant signée par ledit deuxième noeud;
un module pour faire correspondre en paire ladite indication de preuve dudit troisième noeud et son indication de preuve correspondante dudit deuxième noeud en comparant mutuellement leurs indications d'étendue respectives pour déterminer l'étendue de l'utilisation de ladite connexion partagée et pour éviter toute fraude en effectuant la facturation ou la rémunération de l'étendue de l'utilisation de la connexion partagée ;
dans lequel ladite indication d'étendue comprend un ou plusieurs de ce qui suit :
le nombre d'octets reçus ou envoyés ;
une indication de temps de la durée d'utilisation de la connexion.

11. Appareil selon la revendication 10, comprenant en outre :
un module pour effectuer un procédé selon l'une des revendications 1 à 9.

12. Programme informatique comprenant un code de programme qui permet à un ordinateur d'effectuer un procédé selon l'une des revendications 1 à 9.
